# EUROPÄISCHE PATENTSCHRIFT

(11) **EP 0 470 380 B1**
(45) Veröffentlichungstag und Bekanntmachung des Hinweises auf die Patenterteilung: **04.10.2000**
(21) Anmeldenummer: 91111399.1
(22) Anmeldetag: 09.07.1991
(51) Int. Cl.: C08L 23/10, C08L 23/16

(54) **Polypropylen-Formmasse**
Polypropylene moulding composition
Composition de moulage à base de polypropylène

(30) Priorität: 10.07.1990 DE 4021899
(43) Veröffentlichungstag der Anmeldung: 12.02.1992
(73) Patentinhaber: TARGOR GmbH, 55116 Mainz (DE)
(72) Erfinder: Winter, Andreas, Dr., W-6246 Glashütten (DE); Übe, Rudolf, Dr., W-6238 Hofheim am Taunus (DE); Dolle, Volker, Dr., W-6233 Kelkheim/Taunus (DE)

(56) Entgegenhaltungen:
- EP-A- 0 353 981
- FR-A- 1 578 661

## Beschreibung

Die Erfindung bezieht sich auf eine hochschlagzähe Polypropylen-Formmasse aus einem syndiotaktischen Propylenpolymer oder einem syndiotaktischen Propylen-Copolymer und einem Ethylen-Propylen-Copolymer-Kautschuk.

Weiche Polypropylen-Formmassen sind im Prinzip bekannt. Sie werden hergestellt durch Schmelzmischen von isotaktischem Polypropylen (IPP) mit einem Kautschuk, beispielsweise Ethylen-Propylen-Kautschuk (EPM) oder Ethylen-Propylen-Dien-Kautschuk (EPDM). Um niedrige Härtegrade zu erzielen, sind jedoch unwirtschaftlich hohe Mengen Kautschuk erforderlich.

Es ist auch bekannt, isotaktisches Polypropylen, ataktisches Polypropylen (APP) und einen Kautschuk zu mischen.
Das Zumischen von APP führt jedoch zu klebrigen Produkten. Der niedrige Schmelzpunkt des APP bedingt Verarbeitungsprobleme und schlechte Wärmeformbeständigkeit und aus der normalerweise niedrigen Schmelzviskosität des APP resultieren beim Schmelzmischen inhomogene Produkte. Die Verwendung von Knetern beim Mischen verbessert zwar die Homogenität, gleichzeitig sinkt jedoch die Wirtschaftlichkeit der Herstellung der Formmasse. Darüber hinaus wirkt APP beim Unterschreiten seiner Glastemperatur nicht mehr als Weichmacher in der Formmasse, sondern führt im Gegenteil zu einer Versprödung.

Es bestand die Aufgabe, eine weiche Polypropylen-Formmasse zu finden, die einerseits hohe Schlagzähigkeit und Flexibilität auch bei sehr niedriger Temperatur besitzt und andererseits wirtschaftlich herzustellen ist.

Die Aufgabe konnte gelöst werden durch Verwendung eines syndiotaktischen Propylenpolymers anstelle von isotaktischem Polypropylen und Schmelzmischen mit einem Kautschuk.

Die Erfindung betrifft somit eine Polypropylen-Formmasse, im wesentlichen bestehend aus 20 bis 99 Gew.-%, bezogen auf die Formmasse, eines syndiotaktischen Propylenpolymers und 1 bis 80 Gew.-%, bezogen auf die Formmasse, eines Kautschuks mit einer Glastemperatur unter -30°C.

Das zur Herstellung der erfindungsgemäßen Polypropylen-Formmasse zu verwendende syndiotaktische Propylenpolymer ist ein Polymer, bei welchem in einem Teil der Molekülketten jedes zweite tertiäre C-Atom die gleiche Konfiguration besitzt.

Das Propylenpolymer ist entweder ein Propylenhomopolymer mit einem Syndiotaxie-Index von mindestens 75 % oder ein oder zwei Propylencopolymere mit einem syndiotaktischen Index von mindestens 75 %.

Ist das Propylenpolymer bevorzugt nur ein einziges Propylencopolymer, so besteht es zu 99,5 bis 50, vorzugsweise 99 bis 70 Gew.-% aus Propyleneinheiten mit einem Syndiotaxie-Index von mindestens 75 % und zu 0,5 bis 50, vorzugsweise 1 bis 30 Gew.-% Einheiten von Ethylen oder einem Olefin mit mindestens 4 C-Atomen der Formel R^{a}-CH=CH-R^{b}, worin R^{a} und R^{b} gleich oder verschieden sind und ein Wasserstoffatom oder einen Alkylrest mit 1 bis 10, vorzugsweise bis C-Atomen bedeuten oder R^{a} und R^{b} mit den sie verbindenden C-Atomen einen Ring mit 4 bis 22 C-Atomen bilden. Bevorzugte Comonomere sind Ethylen, Buten-1, 4-Methyl-1-penten, Hexen-1, Norbornen und Penten.

Wenn das Propylenpolymer bevorzugt aus zwei Propylencopolymeren besteht, so ist das eine ein Copolymer (a) aus 95 bis 100, vorzugsweise 98 bis 100 Gew.-% Propyleneinheiten mit einem Syndiotaxie-Index von mindestens 75 % und 0 bis 5, vorzugsweise 0 bis 2 Gew.-% Einheiten von Ethylen oder einem Olefin, wie es obenstehend definiert ist, und das andere ein Copolymer (b) aus 20 bis 90, vorzugsweise 40 bis 90 Gew.-% Propyleneinheiten mit einem Syndiotaxie-Index von mindestens 75 % und 10 bis 80, vorzugsweise 10 bis 60 Gew.-% Einheiten von Ethylen oder einem Olefin, wie es obenstehend definiert ist. Der Anteil der beiden Copolymeren (a) und (b) im Propylenpolymer beträgt 20 bis 99, vorzugsweise 40 bis 95 Gew.-% Copolymer (a) und 1 bis 80, vorzugsweise 5 bis 60 Gew.-% Copolymer (b), jeweils bezogen auf die Menge Propylenpolymer.

Das syndiotaktische Propylenpolymer ist in der erfindungsgemäßen Formmasse in einer Menge von 20 bis 99, vorzugsweise 40 bis 95 Gew.-% enthalten.

1 bis 80, vorzugsweise 5 bis 60 Gew.-% der erfindungsgemäßen Formmasse sind ein Kautschuk mit einer Glastemperatur unter -30°C. Geeignete Kautschuke sind beispielsweise Styrol-Butadien-Kautschuke, Silikonkautschuke, Ethylen-Propylen-Kautschuke (EPM) oder Ethylen-Propylen-Dien-Kautschuke (EPDM). EPM- und EPDM-Kautschuke können zusätzlich noch bis zu 40 % Polyethylen enthalten. Als Dien-Komponente kann 1,4-Hexadien, Norbornadien oder Cyclopentadien in einer Menge bis zu 10 Gew.-%, bezogen auf die Gesamtkautschukmenge, enthalten sein.
Die Zusammensetzung an Ethylen und Propylen ist nicht begrenzt, solange eine Glastemperatur der amorphen Komponente von weniger als -30°C erreicht wird.
Eine typische Zusammensetzung für handelsübliche EPM-Kautschuke ist beispielsweise 10-60 Gew.-% Propyleneinheiten und 90-40 Gew.-% Ethyleneinheiten. Von den Ethyleneinheiten entfallen dabei 0-40 Gew.-% auf einen reinen Polyethylenanteil, der Rest bildet zusammen mit dem Propylen den Copolymeranteil.

Entsprechend zusammengesetzt sind EPDM-Kautschuke, im Copolymeranteil sind neben Propylen und Ethylen jedoch zusätzlich noch 1-10 Gew.-% eines Diens vom oben erwähnten Typ eingebaut. Die Schmelzviskosität typischer EPM- und EPDM-Kautschuke liegt zwischen 3 und 300 g/10 min (MFI 230/5).
Die Mooney-Viskosität (gemessen bei 121°C, ML) liegt typisch zwischen 20 und 80. Die Streckspannung bei 60 % Dehnung beträgt typisch 10-300 psi (pound/sq inch, 1 psi = 6894,8 kg/m.sec² = 1 Pa).
Typisch verwendbare Kautschuke sind beispielsweise unter den zur Zeit bestehenden Handelsnamen Vistalon,Exxelor (Exxon Chemicals), Dutral (Dutral S.A.), Nordel (DuPont) oder Buna (Veba) auf dem Markt.

Außer dem syndiotaktischen Propylenpolymer und dem Kautschuk kann die erfindungsgemäße Formmasse noch die üblichen Zusatzstoffe enthalten, beispielsweise Stabilisatoren, Antioxidantien, UV-Absorber, Lichtschutzmittel, Metalldesaktivatoren, Radikalfänger, Füllstoffe und Verstärkungsmittel, Weichmacher, Gleitmittel, Emulgatoren, Pigmente, optische Aufheller, Flammschutzmittel, Antistatika, Treibmittel.

Die Herstellung der erfindungsgemäßen Formmasse kann nach den in der Kunststoffverarbeitung für das Mischen von Polymeren und Zusatzstoffen üblichen Methoden erfolgen.

Eine Möglichkeit ist das Sintern in einem schnellaufenden Mischer, wenn alle Bestandteile der Formmasse pulverförmig sind.

Eine weitere Möglichkeit ist der Einsatz eines Extruders mit Misch- und Knetorganen auf der Schnecke.

Schließlich sind auch Kneter, wie sie in der Gummi- und Kautschukindustrie eingesetzt werden, geeignete Mischmaschinen.

Die Mischtemperatur ist abhängig von der jeweiligen Zusammensetzung der Formmasse.

Die erfindungsgemäße Formmasse zeichnet sich durch niedrige Härte in Kombination mit hoher Schlagzähigkeit, auch bei Temperaturen unter 0°C, aus. Generell ist diese Formmasse überall dort verwendbar, wo gummielastisches Verhalten in Kombination mit hoher Schlagzähigkeit erwünscht ist.

Sie ist beispielsweise als Ersatz für Weich-PVC geeignet. Im Automobilbau ist sie beispielsweise für Seitenleisten, Spoiler, Dichtungen, Kotflügelauskleidungen, Traktorenkotflügel, Verkleidungsteile oder Schalldämmschichten einsetzbar.
Im Bausektor ist sie für Dichtungen, Dampfsperren oder Flachdachfolien sowie isolierende Ummantelungen von Rohren geeignet.

Durch Schaumextrusion erhält man elastische, hochdämmende Ummantelungen und Beläge.
Ferner eignet sich die erfindungsgemäße Formmasse zur Herstellung von Schwergutsäcken und Siegelfolien, sowie von Dichtungsbahnen für Deponien.

Die folgenden Beispiele sollen die Erfindung näher erläutern.
- SI =: Syndiotaxie-Index (durch ¹³C-NMR Spektroskopie).
- n_{syn} =: Mittlere syndiotaktische Kettenlänge (durch ¹³C-NMR).
- n_{PE} =: Mittlere Blocklänge Polyethylen.
- n_{PP} =: Mittlere Blocklänge Polypropylen.
- VZ =: Viskositätszahl gemessen bei 135°C als 0,1 %ige Lösung in Decahydronaphthalin im Kapillarviskosimeter.
- MFI 230/5 =: Schmelzindex bei 230°C, 5 kg Belastung, nach DIN 53 735
- M_{w}/Mₙ =: Polydispersität.
- KDH =: Kugeldruckhärte (in Anlehnung an DIN 53 456, 4 mm dicke Platten, 240°C Spritztemperatur)
- aₙₛ =: Kerbschlagzähigkeit nach DIN 53 753-V-0,1, Normkleinstab (50 x 6 x 4 mm)
- BEM =: Biege-E-Modul nach DIN 53 457 (gespritzte Probekörper 80 x 10 x 4 mm).

Für die Herstellung der Formmassen wurde ein Doppelschneckenextruder ZSK 28 (Fa. Werner & Pfleiderer) verwendet.

### Beispiel 1

Durch Extrusion wurde eine Formmasse hergestellt, bestehend aus 80 Gew.-% syndiotaktischem Polypropylen, bezogen auf die gesamte Formmasse, und 20 Gew.-% eines Kautschuks folgender Zusammensetzung: 37 Gew.-% Propyleneinheiten und 63 Gew.-% Ethyleneinheiten; 20 Gew.-% der Kautschukmasse war Polyethylen und 80 Gew.-% ein Ethylen-Propylen-Copolymer (EMP) bestehend aus 46 Gew.-% Propyleneinheiten und 54 Gew.-% Ethyleneinheiten. Der MFI 230/5 betrug 11 g/10 min, die VZ 284 cm³/g.

Das verwendete syndiotaktische Polypropylen hatte einen SI von 94,5 %, ein n_{syn} von 32 und einen MFI 230/5 von 266 g/10 min, entsprechend einer VZ von 97 cm³/g. Als mechanische Daten wurden ermittelt: KDH = 45 Nmm⁻²; BEM = 792 Nmm⁻²; aₙₛ = 5,8 mJmm⁻² (23°C), 1,9 mJmm⁻² (-20°C).

8 kg des syndiotaktischen Polypropylenpulvers wurden mit 2 kg des Kautschuks gemischt und die Mischung mit 10 g Pentaerythrityl-tetrakis[3(3,5-di-t-butyl-4-hydroxyphenyl)-propionat] gegen chemischen Abbau unter Extrusionsbedingungen stabilisiert. In den fünf Heizzonen des Extruders wurden 100°C (Einzug), 170°C, 200°C, 200°C und 190°C (Düsenplatte) eingestellt.

Die Extruderschnecke wurde mit 100 Upm betrieben; die Massetemperatur der Mischung im Extruder betrug 210°C. An der so hergestellten Formmasse wurden folgende Daten gemessen: MFI 230/5 = 148 g/10 min; VZ = 123 cm³/g; KDH = 32 Nmm⁻²; BEM = 694 Nmm⁻²; aₙₛ = 13,8 mJmm⁻² (23°C), 5,9 mJmm⁻² (-20°C).

### Vergleichsbeispiel A

Unter den gleichen Bedingungen wie in Beispiel 1 wurde statt des syndiotaktischen Polypropylens isotaktisches Polypropylen verwendet, das einen MFI 230/5 von 169 g/10 min entsprechend einer VZ von 128 cm³/g aufwies.
Die so erhaltene Formmasse wies folgende Daten auf: MFI 230/5 = 100 g/10 min; VZ = 150 cm³/g, KDH = 68 Nmm⁻²; BEM = 1380 Nmm⁻²; aₙₛ = 6,8 mJmm⁻² (23°C), 3,5 mJmm⁻² (-20°C).

Das Ergebnis des Vergleichsbeispiels zeigt, daß mit isotaktischem Polypropylen anstelle syndiotaktischen Polypropylens weder die gewünschte niedrige Härte noch die hohe Schlagzähigkeit erreicht werden kann.

### Beispiel 2

Beispiel 1 wurde wiederholt; als syndiotaktische Komponente wurde jedoch ein syndiotaktisches Polypropylen mit einem SI von 93,8 %, einem n_{syn} von 25 und einem MFI 230/5 von 153 cm³/g verwendet.
Als mechanische Daten dieses Polymers wurden ermittelt: KDH = 40 Nmm⁻²; BEM = 604 Nmm⁻² und aₙₛ = 17,5 mJmm⁻² (23°C), 2,8 mJmm⁻² (-20°C).

In den fünf Heizzonen des Extruders wurden 110°C (Einzug), 190°C, 230°C, 230°C und 200°C (Düsenplatte) eingestellt. Die Extruderschnecke wurde mit 40 Upm betrieben.
Die Massetemperatur der Mischung im Extruder betrug 250°C. An der so erstellten Formmasse wurden folgende Daten gemessen: MFI 230/5 = 19 g/min; VZ = 147 cm³/g;
KDH = 27 Nmm⁻²; BEM = 555 Nmm⁻²; aₙₛ = 35,9 mJmm⁻² (23°C), 9,4 mJmm⁻² (0°C), 6,9 mJmm⁻² (-20°C).

### Vergleichsbeispiel B

Unter mit Beispiel 2 vergleichbaren Bedingungen wurde anstelle des syndiotaktischen Polypropylens isotaktisches Polypropylen verwendet, das folgende Werte aufwies: MFI 230/5 = 13 g/10 min entsprechend einer VZ von 258 cm³/g. Die so erhaltene Formmasse zeigte folgende Daten:
MFI 230/5 = 15 g/10 min; VZ = 250 cm³/g; KDH = 52 Nmm⁻²; BEM = 1052 Nmm⁻²; aₙₛ = 16,3 mJmm⁻² (23°C), 7,7 mJmm⁻² (0°C), 5,3 mJmm⁻² (-20°C).

Das Ergebnis zeigt, daß mit isotaktischem anstelle syndiotaktischem Polypropylen weder die gewünschte niedrige Härte (KDH, BEM), noch die hohe Schlagzähigkeit (aₙₛ) erreicht werden kann.

### Beispiel 3

Beispiel 2 wurde wiederholt, als syndiotaktische Komponente wurde ein syndiotaktisches Polypropylen mit einem SI von 94,8 %, einem n_{syn} von 29 und einem MFI 230/5 von 0,7 cm³/g entsprechend einer VZ von 317 cm³/g verwendet.
Als mechanische Daten dieses Polymers wurden ermittelt: KDH = 36 Nmm⁻²; BEM = 527 Nmm⁻² und aₙₛ = 46,6 mJmm⁻² (23°C), 7,8 mJmm⁻² (-20°C).

In den fünf Heizzonen des Extruders wurden 180°C (Einzug), 230°C, 280°C, 280°C und 275°C (Düsenplatte) eingestellt. Die Extruderschnecke wurde mit 35 Upm betrieben.

Die Massetemperatur der Mischung im Extruder betrug 300°C. An der so erstellten Formmasse wurden folgende Daten gemessen: MFI 230/5 = 1,3 g/10 min; VZ = 308 cm³/g;
KDH = 20 Nmm⁻²; BEM = 400 Nmm⁻²; aₙₛ = 53,4 mJmm⁻² und teilweise ohne Bruch (23°C), 23,2 mJmm⁻² (0°C), 10,0 mJmm⁻² (-20°C).

### Beispiele 4, 5 und 6

Beispiel 2 wurde wiederholt, die eingesetzten Kautschukmengen betrugen jedoch 5 % (Beispiel 4), 10 % (Beispiel 5) und 40 % (Beispiel 6), jeweils bezogen auf die gesamte Formmasse. Die Ergebnisse:

| | Beispiel 4 | Beispiel 5 | Beispiel 6 |
|---|---|---|---|
| MFI 230/5 [g/10 min] | 21 | 20 | 17 |
| VZ [cm³/g] | 150 | 151 | 145 |
| KDH [Nmm⁻²] | 37 | 34 | 10 |
| BEM [Nmm⁻²] | 590 | 578 | 465 |

| aₙₛ (mJmm⁻²) | | | |
|---|---|---|---|
| 23°C | 20,0 | 31,1 | ohne Bruch |
| 0°C | 5,9 | 7,0 | 35,9 |
| - 20°C | 3,0 | 3,5 | 12,1 |

### Beispiel 7

Beispiel 2 wurde wiederholt, als syndiotaktische Komponente wurde jedoch ein syndiotaktisches Ethylen/Propylen-Copolymer mit folgenden Eigenschaften verwendet:
Mittlere Polypropylenblocklänge (n_{PP}) = 26, mittlere Polyethylenblocklänge (n_{PE}) = ca. 1, M_{w}/Mₙ = 2,2, SI = 97,2 %, VZ = 149 cm³/g, einpolymerisierter Ethylenanteil = 2,5 Gew.-%.

Darüberhinaus wurden nur 10 % anstelle 20 % Kautschuk, bezogen auf die gesamte Polymermasse, verwendet. Das hier beschriebene Blend zeigte folgende Daten:
MFI 230/5 = 26 g/10 min; VZ = 150 cm³/g; KDH = 17 Nmm⁻²; aₙₛ = 40,4 mJmm⁻² (23°C), 12,6 mJmm⁻² (0°C), 7,3 mJmm⁻² (-20°C).

### Beispiel 8

Es wurde verfahren wie in Beispiel 7, als syndiotaktische Komponente wurde jedoch ein zweistufig polymerisiertes syndiotaktisches Blockcopolymer verwendet (1. Stufe: syndiotaktisches Polypropylen, 2. Stufe: Ethylen/Propylen-Copolymer).
Der Syndiotaxie-Index des Polypropylenanteils (77,5 Gew.-% bezogen auf die Gesamtmenge des Blockcopolymers) betrug 96,4 %; es lag eine VZ von 275 cm³/g vor. Das 22,5 Gew.-% des gesamten Blockcopolymers umfassende Ethylen/Propylen-Copolymer bestand zu 22,1 Gew.-% aus Ethyleneinheiten, die restlichen 77,9 Gew.-% aus syndiotaktisch verknüpften Propyleneinheiten.
Die VZ betrug 304 cm³/g, das Ethylen lag zu 40,5 % isoliert (n_{PE} = 1), zu 10,5 % mit n_{PE} = 2 und zu 49,0 % blockartig eingebaut (n_{PE} ≥ 3) vor.
An der so hergestellten Formmasse wurden folgende Daten gemessen:
MFI 230/5 = 8 g/10 min; VZ = 260 cm³/g; KDH = 13 Nmm⁻²; aₙₛ = ohne Bruch bei 23°C, 24,7 mJmm⁻² (0°C), 10,0 mJmm⁻² (-20°C).

### Vergleichsbeispiel C

Unter vergleichbaren Bedingungen wie in Beispiel 3 wurde statt des syndiotaktischen Polypropylens isotaktisches Polypropylen verwendet, das einen Schmelzindex von 1,1 g/10 min entsprechend einer VZ von 451 cm³/g aufwies. Die so erhaltene Formmasse zeigte folgende Daten:
MFI 230/5 = 2,3 g/10 min; VZ = 360 cm³/g; KDH = 47 Nmm⁻²; BEM = 1151 Nmm⁻²; aₙₛ = 32,7 mJmm⁻² (23°C), 9,8 mJmm⁻² (0°C), 4,3 mJmm⁻² (-20°C).

Das Ergebnis des Vergleichsbeispiels zeigt, daß mit isotaktischem Polypropylen statt syndiotaktischem Polypropylen weder die gewünschte niedrige Härte (KDH, BEM), noch die hohe Schlagzähigkeit (aₙₛ) erzielt werden kann.

## Patentansprüche

1. Polypropylen-Formmasse, im wesentlichen bestehend aus 20 bis 99 Gew.-%, bezogen auf die Formmasse, eines syndiotaktischen Propylenpolymers und 1 bis 80 Gew.-%, bezogen auf die Formmasse, eines Kautschuks mit einer Glastemperatur unter -30°C, wobei das syndiotaktische Propylenpolymer ein Polypropylen mit einem Syndiotaxie-Index von mindestens 75 % ist bzw. ein Copolymer ist, welches 99,5 bis 50 Gew.-% aus Propyleneinheiten mit einem Syndiotaxie-Index von mindestens 75 % und zu 0,5 bis 50 Gew.-% aus Einheiten von Ethylen oder einem Olefin mit mindestens 4 C-Atomen der Formel R^{a}-CH=CH-R^{b}, worin R^{a} und R^{b} gleich oder verschieden sind und ein Wasserstoffatom oder einen Alkylrest mit 1 bis 10 C-Atomen bedeuten oder R^{a} und R^{b} mit den sie verbindenden C-Atomen einen Ring mit 4 bis 22 C-Atomen bilden, besteht.

2. Formmasse nach Anspruch 1, wobei das syndiotaktische Propylenpolymer ein Gemisch aus 20 bis 99 Gew.-% eines Copolymers (a) und 1 bis 80 Gew.-% eines Copolymers (b) ist, wobei Copolymer (a) zu 95 bis 100 Gew.-% Propyleneinheiten mit einem Syndiotaxie-Index von mindestens 75 % und zu 0 bis 5 Gew.-% Einheiten von Ethylen oder einem Olefin mit mindestens 4 C-Atomen der Formel R^{a}-CH=CH-R^{b}, worin R^{a} und R^{b} die vorgenannte Bedeutung haben, besteht und Copolymer (b) zu 20 bis 90 Gew.-% aus Propyleneinheiten mit einem Syndiotaxie-Index von mindestens 75 % und zu 10 bis 80 Gew.-% aus Einheiten von Ethylen oder einem Olefin mit mindestens 4 C-Atomen der Formel R^{a}-CH=CH-R^{b}, worin R^{a} und R^{b} die vorgenannte Bedeutung haben, besteht.

3. Formmasse nach Anspruch 1, dadurch gekennzeichnet, daß sie zusätzlich Stabilisatoren, Antioxidantion, UV-Absorber, Lichtschutzmittel, Metalldesaktivatoren, Radikalfänger, Füllstoffe und Verstärkungsmittel, Weichmacher, Gleitmittel, Emulgatoren, Pigmente, optische Aufheller, Flammschutzmittel, Antistatika oder Treibmittel enthält.

4. Verwendung der Polypropylen-Formmasse nach Anspruch 1 zur Herstellung von Formkörpern mit niedriger Härte, gummielastischem verhalten und hoher Schlagzähigkeit.

## Claims

1. A polypropylene molding composition, essentially comprising from 20 to 99% by weight, based on the molding composition, of a syndiotactic propylene polymer, and from 1 to 80% by weight, based on the molding composition, of a rubber having a glass transition temperature of below -30°C, the syndiotactic propylene polymer being a polypropylene having a syndiotacticity index of at least 75% or a copolymer comprising from 99.5 to 50% by weight of propylene units having a syndiotacticity index of at least 75%, and from 0.5 to 50% by weight of units of ethylene or an olefin having at least 4 carbon atoms, of the formula R^{a}-CH=CH-R^{b} in which R^{a} and R^{b} are identical or different and are hydrogen or alkyl having 1 to 10 carbon atoms, or R^{a} and R^{b}, together with the carbon atoms connecting them, form a ring having from 4 to 22 carbon atoms.

2. A molding composition as claimed in claim 1, in which the syndiotactic propylene polymer is a mixture of from 20 to 99% by weight of a copolymer (a) and from 1 to 80% by weight of a copolymer (b), where copolymer (a) comprises from 95 to 100% by weight of propylene units having a syndiotacticity index of at least 75%, and from 0 to 5% by weight of units of ethylene or an olefin having at least 4 carbon atoms, of the formula R^{a}-CH=CH-R^{b} in which R^{a} and R^{b} are as defined above, and copolymer (b) comprises from 20 to 90% by weight of propylene units having a syndiotacticity index of at least 75%, and from 10 to 80% by weight of units of ethylene or an olefin having at least 4 carbon atoms, of the formula R^{a}-CH=CH-R^{b} in which R^{a} and R^{b} are as defined above.

3. A molding composition as claimed in claim 1, which additionally contains stabilizers, antioxidants, UV absorbers, light screens, metal deactivators, free-radical scavengers, fillers and reinforcing agents, plasticizers, lubricants, emulsifiers, pigments, optical whiteners, flameproofing agents, antistatics or blowing agents.

4. The use of a polypropylene molding composition as claimed in claim 1 for the production of moldings of low hardness, rubber-elastic behavior and high impact strength.

## Revendications

1. Masse à mouler de polypropylène, constituée pour l'essentiel de 20 à 99 % en poids, par rapport à la masse à mouler, d'un polymère du propylène syndiotactique et de 1 à 80 % en poids, par rapport à la masse à mouler, d'un caoutchouc ayant une température de transition vitreuse inférieure à -30°C, le polymère du propylène syndiotactique étant un polypropylène ayant un indice de syndiotactisme d'au moins 75%, ce polymère étant un copolymère qui, pour 99,5 à 50 % en poids, est constitué de motifs propylène ayant un indice de syndiotactisme d'au moins 75 %, et pour 0,5 à 50 % en poids de motifs éthylène ou d'une oléfine ayant au moins 4 atomes de carbone, de formule R^{a}-CH=CH-R^{b}, où R^{a} et R^{b} sont identiques ou différents et représentent un atome d'hydrogène ou un radical alkyle ayant de 1 à 10 atomes de carbone, ou encore R^{a} et R^{b} forment, avec les atomes de carbone qui les relient, un cycle ayant 4 à 22 atomes de carbone.

2. Masse à mouler selon la revendication 1, dans laquelle le polymère du propylène syndiotactique est un mélange de 20 à 99 % en poids d'un copolymère (a) et de 1 à 80 % en poids d'un copolymère (b), le copolymère (a) étant pour 95 à 100 % en poids constitué de motifs propylène ayant un indice de syndiotactisme d'au moins 75 % et pour 0 à 5 % en poids de motifs éthylène ou d'une oléfine ayant au moins 4 atomes de carbone, de formule R^{a}-CH=CH-R^{b}, dans laquelle R^{a} et R^{b} ont les significations données ci-dessus, et le copolymère (b) est constitué pour 20 à 90 % en poids de motifs propylène ayant un indice de syndiotactisme d'au moins 75 %, et pour 10 à 80 % en poids de motifs éthylène ou d'une oléfine ayant au moins 4 atomes de carbone, de formule R^{a}-CH=CH-R^{b} dans laquelle R^{a} et R^{b} ont les significations données ci-dessus.

3. Masse à mouler selon la revendication 1, caractérisée en ce qu'elle contient en outre des stabilisants, des antioxydants, des absorbants UV, des agents de protection contre la lumière, des désactivateurs de métaux, des capteurs de radicaux, des matières de charge et des renforts, des plastifiants, des lubrifiants, des émulsifiants, des pigments, des azurants optiques, des agents dignifugation, des antistatiques ou des propulseurs.

4. Utilisation de la masse à mouler de polypropylène selon la revendication 1 pour préparer des objets façonnés ayant une faible dureté, un comportement élastique et une grande résistance au choc.
